# EUROPEAN PATENT APPLICATION

(11) **EP 2 426 769 A1**
(43) Date of publication of application: **07.03.2012**
(21) Application number: 10769433.3
(22) Date of filing: 05.03.2010
(51) Int. Cl.: H01M 8/06, C01B 3/38, C01B 3/48, H01M 8/04, H01M 8/10

(54) **REFORMER FOR FUEL CELL**

(30) Priority: 28.04.2009 JP 2009110058
(71) Applicant: Eneos Celltech Co., Ltd., Gunma 370-0596 (JP)
(72) Inventor: KAJITA, Takuya, Ora-gun Gunma 370-0596 (JP); KADOWAKI, Masataka, Ora-gun Gunma 370-0596 (JP); FUJU, Akira, Ora-gun Gunma 370-0596 (JP); HARA, Yoshitaka, Ora-gun Gunma 370-0596 (JP); NISHIMURA, Yoshinobu, Ora-gun Gunma 370-0596 (JP)
(74) Representative: Algemeen Octrooi- en Merkenbureau
(86) International application number: PCT/JP2010/001569
(87) International publication number: WO 2010/125731

(57) **Abstract**

A reforming apparatus (100) includes a reformer (120) for generating the reformed gas, a combustor (130) for producing the combustion exhaust gas, a vaporizer (150) for heating the reforming water by the combustion exhaust gas, a superheated steam generator (160) for performing a heat exchange between the reforming water and the reformed gas, a CO reducer (140), having a catalyst layer containing a catalyst capable of promoting the reaction of reducing carbon monoxide contained in the reformed gas, in which the reduced gas having been subjected to a heat exchange with the reforming water at the superheated steam (160) is supplied and the temperature of the catalyst layer is adjusted as a result of the heat exchange with the reformed gas, a combustion air blower (171), and a controller (180). The control unit (180) controls the heating rate of the reforming water by the combustion exhaust gas at the vaporizer (150) in a manner such that the feed rate of the combustion air is regulated based on the temperature of the reforming water downstream of the vaporizer (150) or based on the temperature of the reformed gas downstream of the superheated steam generator (160).

## Description

### TECHNICAL FIELD

The present invention relates to a reforming apparatus for a fuel cell which generates a reformed gas containing hydrogen gas as the main component by reforming raw fuel.

### BACKGROUND TECHNOLOGY

Recently much attention has been focused on fuel cells that feature not only high energy conversion efficiency but also no hazardous substance produced by the electricity-generating reaction. Known as one of such fuel cells is a fuel cell which has a basic structure of an electrolyte membrane, disposed between a fuel electrode and an air electrode as with PEFC (polymer electrolyte fuel cell), and which generates power through an electrochemical reaction as described below by supplying a fuel gas containing hydrogen to the fuel electrode and supplying an oxidant gas containing oxygen to the air electrode.

Fuel electrode : H₂→2H⁺+2e⁻ (1)

Air electrode : (1/2)O₂+2H⁺+2e⁻→H₂O (2)

At the fuel electrode, the hydrogen contained in the supplied fuel gas is decomposed into hydrogen ions and electrons as expressed in the above formula (1). Of them, the hydrogen ions travel inside the electrolyte membrane toward the air electrode, whereas the electrons travel through an external circuit to the air electrode. At the air electrode, on the other hand, the oxygen contained in oxidant gas supplied to the air electrode reacts with the hydrogen ions and electrons having come from the fuel electrode to produce water as expressed in the above formula (2). In this manner, the electrons travel from the fuel electrode toward the air electrode in the external circuit, so that the electric power is extracted therefrom.

The fuel cell having a structure as described above generates electric power by converting chemical energy possessed by hydrogen into electric energy. A fuel gas containing hydrogen can be obtained, for instance, by mixing a hydrocarbon-based raw fuel, such as kerosene, natural gas, LPG, or naphtha, or a raw fuel gas of an alcohol type, such as methanol, with steam and thus reforming the fuel with a reforming apparatus. The fuel gas obtained by reforming (reformed gas) is supplied to the fuel electrode of the fuel cell to be used for power generation.

Known as such a reforming apparatus are reforming apparatuses provided with a reformer, a combustor, and a carbon monoxide reducer (See Patent Document 1 to Patent Document 5, for instance). Such reforming apparatuses perform processes as described below.

That is, the reformer steam-reforms the supplied raw fuel through a reaction thereof to steam and thereby generates a reformed gas containing hydrogen and carbon monoxide. The combustor generates a combustion exhaust gas in such a manner that raw fuel or cell offgas discharged unreacted from the fuel cell is mixed with combustion air and then they are combusted. The reformer is heated by this combustion exhaust gas, and thus the heat necessary for a steam-reforming reaction is supplied to the reformer.

Also, steam is generated as the water for reforming is heated by the combustion exhaust gas and the like, and the steam is supplied to the reformer. The reformed gas generated by the reformer is sent to the carbon monoxide reducer, where carbon monoxide, which can cause the degradation of the catalyst or the like contained in a fuel cell body, is reduced. More specifically, the carbon monoxide in the reformed gas is converted into carbon dioxide through its reaction to water in the presence of the catalyst. Or, further, the carbon monoxide in the reformed gas is converted into carbon dioxide through a selective oxidation in the presence of the catalyst.

### [Related Art Documents]

### [Patent Documents]

[Patent Document 1] Japanese Unexamined Patent Application Publication No. 2008-201638.
[Patent Document 2] Japanese Unexamined Patent Application Publication No. 2007-261871.
[Patent Document 3] Japanese Unexamined Patent Application Publication No. 2007-109590.
[Patent Document 4] Japanese Unexamined Patent Application Publication No. 2006-228654.
[Patent Document 5] Japanese Unexamined Patent Application Publication No. 2005-93345.

### DISCLOSURE OF THE INVENTION

### PROBLEMS TO BE SOLVED BY THE INVENTION

In the reforming apparatus having a structure as described above, it is required that the temperature of a catalyst layer provided in the carbon monoxide reducer be maintained at a temperature suited for the reaction to reduce carbon monoxide. As a method for maintaining the temperature of the catalyst layer, it is conceivable to employ, for instance, a self heat recovery type structure for the reforming apparatus that adjusts the temperature of the catalyst layer by the heat possessed by the reformed gas. With this method, it is possible to maintain the temperature of the catalyst layer suited for the reduction reaction without any particular temperature control using a heater or the like.

However, with the reforming apparatus having a self heat recovery type structure as described above, there have been possibilities that the temperature of the reformed gas supplied to the carbon monoxide reducer changes due to such disturbances as changes in the temperature and flow rate of raw fuel and changes in the ambient temperature of the reforming apparatus. And this has led to the possibility that the temperature of the catalyst layer deviates from the temperature at which the catalyst can maintain its activity, namely, the temperature that is suited for the reaction of reducing carbon monoxide. If the temperature of the catalyst layer deviates from the proper temperature range, an amount of carbon monoxide exceeding a defined amount reaches the fuel cell and degrades the catalyst of the fuel cell, which causes a drop in the power generation efficiency of the fuel cell.

The present invention has been made in view of the foregoing circumstances, and a purpose thereof is to provide a technology for maintaining the catalyst layer of the carbon monoxide reducer at preferable temperatures.

### MEANS FOR SOLVING THE PROBLEMS

One embodiment of the present invention relates to a reforming apparatus for a fuel cell. The reforming apparatus for a fuel cell includes: a reformer configured to generate a reformed gas containing hydrogen gas as a main component by reacting raw fuel with steam; a combustor configured to produce a combustion exhaust gas for heating the reformer, by mixing the raw fuel or cell offgas with combustion air and combusting the raw fuel or cell offgas mixed with the combustion air; a heating unit configured to heat reforming water, which is a source of the steam, by the combustion exhaust gas; a heat exchanger configured to perform a heat exchange between the reforming water having passed through the heating unit and the reformed gas; a carbon monoxide reducer to which the reformed gas, which has been subjected to a heat exchange with the reforming water at the heat exchanger, is supplied, the carbon monoxide reducer being configured to adjust the temperature of a catalyst layer as a result of the heat exchange with the reformed gas, and the carbon monoxide reducer having the catalyst layer containing a catalyst capable of promoting a reaction of reducing carbon monoxide contained in the reformed gas; an air supply unit configured to supply the combustion air to the combustor; and a controller configured to regulate a feed rate of the combustion air to the combustor by controlling the air supply unit, wherein the controller controls the heating rate of the reforming water by the combustion exhaust gas at the heating unit in a manner such that the feed rate of the combustion air is regulated based on the temperature of the reforming water downstream of the heating unit or based on the temperature of the reformed gas downstream of the heat exchanger.

According to this embodiment, the temperature of the reforming water which is subjected to a heat exchange with the reformed gas is regulated. As a result, the catalyst layer of the carbon monoxide reducer can be maintained at a suitable temperature.

In the above-described embodiment, when the temperature of the reforming water downstream of the heating unit or the temperature of the reformed gas downstream of the heat exchanger is a predetermined upper limit or above, the controller may lower the feed rate of the combustion air in such a manner as to fall below the upper limit; and when the temperature of the reforming water downstream of the heating unit or the temperature of the reformed gas downstream of the heat exchanger is a predetermined lower limit or below, the controller may raise the feed rate of the combustion air in such a manner as to exceed the lower limit.

The reforming apparatus, for a fuel cell, in the above-described embodiment may further include a temperature detector configured to detect the temperature of the steam supplied to the reformer, wherein the controller may regulate the feed rate of the combustion air to the combustor based on a detection result of the temperature detector.

The reforming apparatus, for a fuel cell, in the above-described embodiment may further include a reforming water supply unit configured to supply the reforming water to the reforming apparatus for a fuel cell, wherein the controller may be capable of regulating the feed rate of the reforming water to the reforming apparatus for a fuel cell by controlling the reforming water supply unit, and the controller may control the temperature of the reforming water, which is subjected to the heat exchange with the reformed gas, by regulating the feed rates of the combustion air and the reforming water.

The reforming apparatus, for a fuel cell, in the above-described embodiment may further include a structure by which to perform a heat exchange between the catalyst layer and the reforming water, wherein the temperature of the catalyst layer may be controlled by a heat exchange with the reforming water in addition to a heat exchange with the reformed gas supplied to the carbon monoxide reducer

It is to be noted that any arbitrary combinations or rearrangement, as appropriate, of the aforementioned constituting elements and so forth are all effective as and encompassed by the embodiments of the present invention.

### EFFECT OF THE INVENTION

By employing a reforming apparatus, for a fuel cell, according to one embodiment of the present invention, the catalyst layer of the carbon monoxide reducer can be maintained at a preferable temperature.

### BRIEF DESCRIPTION OF THE DRAWINGS

FIG. 1 is a schematic diagram showing an overall structure of a fuel cell system according to a first embodiment.
FIG. 2 is a control flow chart of controlling the feed rate of combustion air in a reforming apparatus according to a first embodiment.
FIG. 3 is a control flow chart of controlling the feed rates of combustion air and reforming water in a reforming apparatus according to a second embodiment.
FIG. 4 is a control flow chart of controlling the feed rates of combustion air and reforming water in a reforming apparatus according to a second embodiment.
FIG. 5 is a control flow chart of controlling the feed rates of combustion air and reforming water in a reforming apparatus according to a second embodiment.

### BEST MODE FOR CARRYING OUT THE INVENTION

Hereinbelow, the embodiments will be described with reference to the accompanying drawings. Note that the identical components are given the identical reference numerals in all accompanying Figures and the repeated description thereof will be omitted as appropriate.

### (First Embodiment)

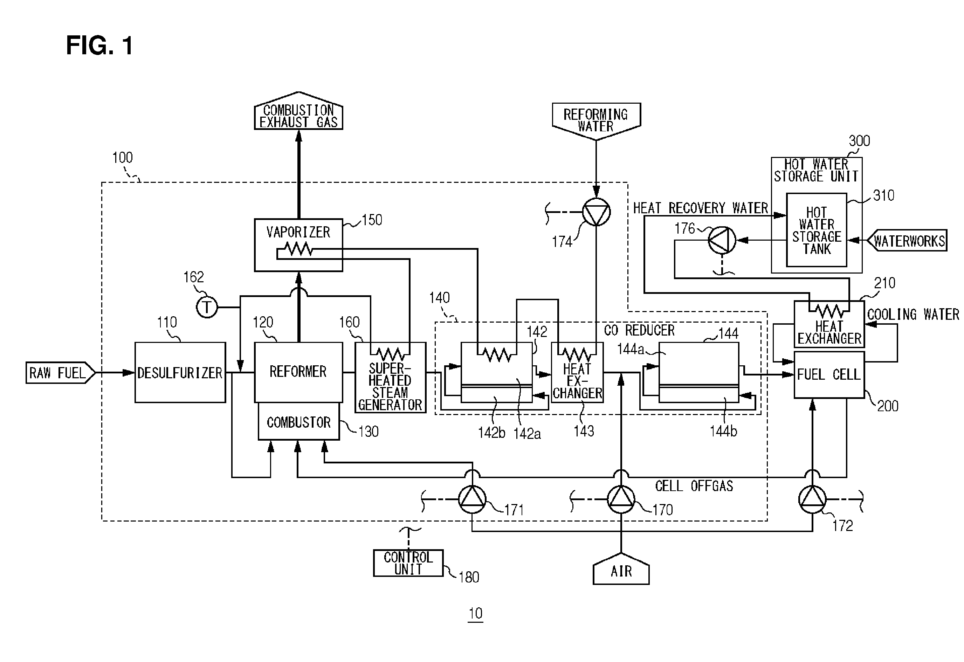

FIG. 1 is a schematic diagram showing an overall structure of a fuel cell system according to a first embodiment. It is to be noted that the schematic diagram of FIG. 1 is a diagram schematically showing mainly the functions of the constituent units and their interrelations and is not intended to limit the positional relations or arrangement of the constituent units.

The fuel cell system 10 includes a reforming apparatus 100 (reforming apparatus for fuel cell), a fuel cell 200, and a hot water storage unit 300. Hereinbelow, a detailed description is given of the constituent units thereof.

### <Reforming apparatus>

The reforming apparatus 100 is a reforming apparatus for a fuel cell which generates a reformed gas containing hydrogen gas as the main component by steam-reforming raw fuel. The reforming apparatus 100 includes a desulfurizer 110, a reformer 120, a combustor 130, and a carbon monoxide reducer 140 (hereinafter the carbon monoxide reducer will be referred to as "CO reducer" as appropriate).

### (Desulfurizer)

The desulfurizer 110 is a unit employing an adsorption system, in which a sulfur component is adsorbed by an adsorbent such as zeolite, or a so-called hydrogenation desulfurization system, in which the sulfur component is removed through a reaction of raw fuel containing a sulfur component to hydrogen in the presence of a catalyst.

As the raw fuel for a fuel gas containing hydrogen, a hydrocarbon raw fuel, such as kerosene, natural gas, LPG, or naphtha, is supplied to the reforming apparatus 100. Generally the raw fuel contains a sulfur compound as an impurity or an odorant that makes detection of gas leak easier. If the raw fuel containing the sulfur compound is sent directly to the reformer 120, the sulfur compound will act as a catalyst poison on the catalyst contained in the reformer 120 and the fuel cell 200 and the like disposed downstream of the reformer 120, which will reduce the reforming performance of the reforming apparatus 100 and the power generating performance of the fuel cell 200 by the sulfur poisoning. Hence, the sulfur compound contained in the raw fuel is removed by the desulfurizer 110.

The desulfurizer 110 has a zeolite-based adsorbent supporting silver (Ag) (as the adsorbent). And the sulfur compound contained in the raw fuel is removed by adsorptive desulfurization reaction by this adsorbent. The raw fuel is subjected to desulfurization until the concentration of the sulfur compound reaches about 20 to 50 ppb, for instance. The raw fuel from which the sulfur compound has been removed by the desulfurizer 110 is sent to the reformer 120 or the combustor 130. The arrangement may also be such that a catalyst layer having a Co-Mo-based or Ni-Mo-based catalyst, for instance, as a hydrogenerated desulfurization catalyst is provided, and the sulfur compound is removed through a hydrogenerated desulfurization reaction using this hydrogenerated desulfurization catalyst.

### (Reformer)

The reformer 120 is provided with a reforming catalyst layer (not shown) having a Ru-based reforming catalyst with a carrier, such as alumina, supporting ruthenium (Ru) as metal particles. The raw fuel processed by the desulfurizer 110 and steam are supplied to the reformer 120, where a steam-reforming of the raw fuel is performed in the presence of the reforming catalyst. In this steam-reforming, as shown in formula (3), a reforming reaction takes place, in which methane in the raw fuel, for instance, and steam react to each other to produce hydrogen and carbon monoxide. This reforming reaction is performed within a range of about 650°C to 700°C, for instance.

CH₄+H₂O→3H₂+CO (3)

The steam required for the reforming reaction at the reformer 120 is generated by vaporing the reforming water (water for reforming use) supplied to the reformer 100. The reforming water is produced by processing water from the waterworks by a water treatment unit (not shown) provided with a reverse osmosis membrane, ionexchange resin, and the like. The water treatment unit not only lowers the electric conductivity of the water from the waterworks but also reduces organic matter having mixed therein. The feed rate of reforming water can be adjusted by adjusting the output of a reforming water pump 174 (reforming water supply unit).

The reforming water supplied to the reforming apparatus 100 is subjected to a heat exchange with the reformed gas at a heat exchanger 143 to be discussed later which is included in the CO reducer 140. Through this heat exchange, the reforming water is heated and at the same time the temperature of the reformed gas is lowered. Also, the reforming water is subjected to a heat exchange with a catalyst layer provided in a carbon monoxide converter 142 to be discussed later which is included in the CO reducer 140. Through this heat exchange, the reforming water is heated and at the same time the temperature of the catalyst layer is adjusted. The reaction of reducing carbon monoxide at the catalyst layer occurs more actively on a side where the reformed gas flows in (inlet portion) than on a side where the reformed gas flows out (outlet portion), and this reaction is generally an exothermic reaction. Therefore, a preferred arrangement is such that the heat exchange with the reforming water takes place more at the inlet portion than at the outlet portion of the catalyst layer. More specifically, the CO converter 142 has, for instance, a approximately cylindrical structure, with a conduit (not shown) for reforming water wound around the outer periphery thereof. The conduit for reforming water is wound three turns around the outer periphery of the inlet side of the catalyst layer and two turns around the outer periphery of the outlet side thereof. As a result, the ratio of heat recovery at the inlet portion by the reforming water to that at the outlet portion is 3:2.

And the reforming water having undergone a heat exchange at the CO converter 142 is further heated through a heat exchange with the combustion exhaust gas produced by the combustor 130 at a vaporizer 150 (heating unit). Then the reforming water is further heated through a heat exchange with the reformed gas discharged from the reformer 120 at a superheated steam generator 160 (heat exchanger) which is disposed downstream of the reformer 120 and upstream of the CO reducer 140. Through these heat exchanges, the reforming water is vaporized into steam, which is mixed into the raw fuel at a point downstream of the desulfurizer 110 and upstream of the reformer 120. The temperature of the steam is detected by a steam temperature sensor 162 (temperature detector). The steam temperature sensor 162, which is connected to a control unit 180 to be discussed later via a signal cable, can transmit the detected temperature of the steam as a signal to the control unit 180.

### (Combustor)

Provided beneath the reformer 120 is a combustor 130, which includes a burner or the like. The combustor 130 mixes the raw fuel or the cell offgas (hereinbelow the raw fuel and the cell offgas being referred to collectively as "combustion fuel" as appropriate) with combustion air to burn the mixture, thereby producing a combustion exhaust gas for heating the reformer 120. The reformer 120 is heated by the combustion exhaust gas produced by the combustor 130 and thereby the heat necessary for the reforming reaction, which is an endothermic reaction, is obtained.

More specifically, at the start-up of the fuel cell system 10 or the reforming apparatus 100, part of the raw fuel supplied to the reforming apparatus 100 and combustion air taken in from outside the fuel cell system 10 are supplied to the combustor 130. And the combustor 130 mixes the raw fuel and combustion air, and burn them. Also, as the fuel cell system 10 reaches the stage of stable operation, the supply of raw fuel to the combustor 130 stops and the cell offgas, which is the reformed gas discharged unreacted at the fuel cell 200, is supplied to the combustor 130. And the combustor 130 mixes the cell offgas and combustion air, and burn them. The supply of raw fuel to the desulfurizer 110 and the combustor 130 is regulated by the drive of a raw fuel pump (not shown) for supplying raw fuel and the switching of a switching valve (not shown) for switching between a raw fuel conduit leading to the reformer 120 and a raw fuel conduit leading to the combustor 130. The drive of the raw fuel pump and the switching of the switching valve are controlled by the control unit 180.

The air taken into the fuel cell system 10 from outside by the use of a combustion air blower 171 (air supply unit) or the like is used as air supplied to the combustor 130. The air taken into the fuel cell system 10 is sent to the combustor 130 after the dust and other suspended matter are removed from it with a filter (not shown). The amount of combustion air to be supplied to the combustor 130 can be regulated by adjusting the output of the combustion air blower 171.

The cell offgas is sent to the combustor 130 by way of a gas-liquid separator (not shown). At the gas-liquid separator, the gas component only of the cell offgas is extracted, and the gas component is sent to the combustor 130.

A high-temperature combustion exhaust gas at about 1200°C to about 1300°C is produced through combustion of the combustion fuel at the combustor 130. The combustion exhaust gas reaches the vaporizer 150 after the combustion exhaust gas is used to raise the temperature of the reformer 120. Then the combustion exhaust gas is subjected to a heat exchange with the reforming water at the vaporizer 150 before the combustion exhaust gas is discharged outside the fuel cell system 10.

As a result of the reforming reaction at the reformer 120, a reformed gas containing about 80% of hydrogen (fuel) and about 10% of carbon monoxide is produced from the raw fuel. The reformed gas thus produced is sent downstream and reaches the CO reducer 140 after the reformed gas is subjected to a heat exchange with the reforming water at the superheated steam generator 160.

### (Carbon monoxide reducer)

The CO reducer 140 includes a carbon monoxide converter 142 (hereinafter referred to as "CO converter" as appropriate) and a carbon monoxide remover 144 (hereinafter referred to as "CO remover" as appropriate). The CO converter 142 and the CO remover 144 are disposed such that the CO converter 142 is located on an upstream side, whereas the CO remover 144 on a downstream side relative to the flow of the reformed gas. Also, the CO reducer 140 is provided with a heat exchanger 143, which is disposed between the CO converter 142 and the CO remover 144 on a conduit of reformed gas. It is to be noted that the carbon monoxide reducer may include the CO converter 142 or the CO remover 144 only.

The CO converter 142, which has a so-called self heat recovery type structure, is provided with a catalyst layer 142a having a Cu-Zn-based catalyst composed of pellets of copper oxide or zinc oxide, for instance, and a heat exchanger 142b for effecting a heat exchange between the reformed gas and the catalyst layer 142a. The reformed gas having been sent from the reformer 120 by way of the superheated steam generator 160 is first sent to the heat exchanger 142b, where a heat exchange between the reformed gas and the catalyst layer 142a is performed. As a result of the heat exchange with the reformed gas, the catalyst layer 142a is regulated to a temperature suited for a shift reaction to be discussed later.

Then the reformed gas having passed through the heat exchanger 142b reaches the catalyst layer 142a, where the carbon monoxide contained in the reformed gas is reduced through the shift reaction as represented by formula (4) below using the steam contained in the reformed gas. The shift reaction takes place within a range of about 200°C to about 300°C, for instance.

CO+H₂O→CO₂+H₂ (4)

By the shift reaction at the CO converter 142, the concentration of carbon monoxide in the reformed gas produced by the reformer 120 is reduced to about 0.5% or below. The reformed gas whose carbon monoxide is reduced at the CO converter 142 is sent further downstream and reaches the CO remover 144 after the reformed gas is subjected to a heat exchange with the reforming water at the heat exchanger 143.

### (Carbon monoxide remover)

The CO remover 144, which has a self heat recovery type structure like the CO converter 142, is provided with a selective oxidation catalyst layer 144a having a Ru-based selective oxidation catalyst with a carrier, such as alumina, supporting ruthenium (Ru) as metal particles and a heat exchanger 144b for effecting a heat exchange between the reformed gas and the selective oxidation catalyst layer 144a. The reformed gas having been sent from the CO converter 142 is first sent to the heat exchanger 144b, where a heat exchange between the reformed gas and the selective oxidation catalyst layer 144a is performed. As a result of the heat exchange with the reformed gas, the selective oxidation catalyst layer 144a is regulated to a temperature suited for a selective oxidation reaction to be discussed later.

Then the reformed gas having passed through the heat exchanger 144b reaches the selective oxidation catalyst layer 144a, where the carbon monoxide remaining in the reformed gas is selectively oxidized as the reformed gas and the air taken in from outside come in contact with each other in the presence of the selective oxidation catalyst. The selective oxidation reaction that occurs at the CO remover 144 is represented by formula 5 below. The selective oxidation reaction takes place within a range of about 70°C to about 180°C, for instance.

CO+(1/2)O₂→CO₂ (5)

The air taken into the fuel cell system 10 from outside by the use of a selective oxidation air blower 170 or the like is used as air supplied to the CO remover 144 (hereinafter referred to as "selective oxidation air" as appropriate). The air taken into the fuel cell system 10 is subjected to a removal of dust and other suspended matter with a filter and then supplied to the CO remover 144 after undergoing humidification and heating. The amount of selective oxidation air to be supplied to the CO remover 144 can be regulated by adjusting the output of the selective oxidation air blower 170. Also, the arrangement may be such that a check valve (not shown) is provided on the conduit of air from outside to the reforming apparatus 100 in order to prevent the leak of raw fuel or reformed gas from the reforming apparatus 100 to the exterior.

By the selective oxidation reaction at the CO remover 144, the concentration of carbon monoxide in the reformed gas is reduced to about 10 ppm or below. The reformed gas from which carbon monoxide has been selectively removed by the CO remover 144 is supplied to the anode (not shown) of the fuel cell 200 after the reformed gas is subjected to heating, humidification, and the like.

### <Fuel cell>

The fuel cell 200 according to the present embodiment is, for example, a polymer electrolyte fuel cell (PEFC). The fuel cell 200 has a laminated body (not shown) comprising a stack of a plurality of cells (single cells) each provided with a solid polymer electrolyte membrane as an electrolyte membrane between the anode and the cathode. The fuel cell 200 generates electric power, using hydrogen as the fuel and air as the oxidant.

Hydrogen as the fuel is supplied from the reforming apparatus 100. That is, the reformed gas sent from the CO reducer 140 of the reforming apparatus 100 is supplied to the anode, and the hydrogen contained in the reformed gas is used as the fuel. The air taken into the fuel cell system 10 from outside by the use of an oxidant blower 172 or the like is used as air as the oxidant. The air taken into the fuel cell system 10 is subjected to a removal of dust and other suspended matter with a filter and then supplied to the cathode of the fuel cell 200 after undergoing humidification and heating. The amount of air as the oxidant to be supplied to the fuel cell 200 can be regulated by adjusting the output of the oxidant blower 172. Also, the arrangement may be such that a check valve (not shown) is provided on the conduit of air from outside to the fuel cell 200 in order to prevent the leak of reformed gas from the fuel cell 200 to the exterior.

With the fuel and air supplied, an electrode reaction as represented by formula (1) below occurs at the anode in contact with one of the faces of the solid polymer electrolyte membrane at each cell of the fuel cell 200. On the other hand, an electrode reaction as represented by formula (2) below occurs at the cathode in contact with the other of the faces of the solid polymer electrolyte membrane. Each cell, which is cooled by the cooling water passing through a cooling water plate (not shown), is regulated to a proper temperature of about 70°C to about 80°C.

H₂→2H⁺+2e⁻ (1)

(1/2)O₂+2H⁺+2e⁻7H₂O (2)

The DC power generated by the fuel cell 200 is converted to a DC power of a predetermined voltage (e.g., 24 V) by a converter (not shown) and then converted into an AC power (e.g., 100 V) by an inverter (not shown). The AC power having been converted by the inverter is outputted to a system (not shown). Also, the DC power of the predetermined voltage having been converted by the converter is used as power supply to the control unit 180 and the like.

The fuel cell system 10 is so arranged that the cooling water passing through the cooling water plate is circulated between the fuel cell 200 and the heat exchanger 210 by a circulation pump (not shown). The heat energy produced by the power generation of the fuel cell 200 is taken outside the fuel cell 200 by the cooling water. The cooling water having passed through the fuel cell 200 is again used to cool the fuel cell 200 after the cooling water is subjected to a heat exchange with heat recovery water sent from the hot water storage unit 300 at the heat exchanger 210.

### <Hot water storage unit>

The hot water storage unit 300 has a hot water storage tank 310. Water from the waterworks is supplied to the hot water storage tank 310. The water supplied to the hot water storage tank 310 is sent out as heat recovery water by a heat recovery water pump 176 to the heat exchanger 210, where a heat exchange is performed between the heat recovery water and the cooling water discharged from the fuel cell 200. As a result, the heat recovery water is heated by the heat energy produced by the fuel cell 200, and hot water is stored in the hot water storage tank 310. Thus, the heat energy produced by the fuel cell 200 can be stored as hot water in the hot water storage tank 310, which improves the thermal efficiency of the fuel cell system 10.

### <Control unit>

The operations of the reforming apparatus 100, the fuel cell 200, and the hot water storage unit 300 are each controlled by the control unit 180 (controller). Also, the control unit 180, which is connected to the steam temperature sensor 162 via the signal cable as described above, can receive a detection result signal of the steam temperature sensor 162. Also, the control unit 180 is connected to the selective oxidation air blower 170, the combustion air blower 171, and the oxidant blower 172, respectively, via signal cables, and transmits flow rate regulating signals, with which to regulate the flow rates of air, to the selective oxidation air blower 170, the combustion air blower 171, and the oxidant blower 172, respectively. Also, the control unit 180 is connected to the reforming water pump 174 and the heat recovery water pump 176, respectively, via signal cables, and transmits the flow rate regulating signals, with which to regulate the flow rate of reforming water or recovery water, to the reforming water pump 174 and the heat recovery water pump 176, respectively.

Further, the control unit 180 transmits and receives an electric signal among the raw fuel pump for supplying raw fuel, the switching valve for the switching between the raw fuel conduits, the circulation pump for circulating the cooling water to cool the fuel cell 200, the converter, the inverter, and so forth to thereby control each of these various types of equipment. The control unit 180 may be able to perform wireless infrared communication with a remote controller (not shown). In such a case, a user can control the operation of the fuel cell system 10 using the remote controller and set the temperature and the like of the hot water storage tank 310.

An operation of the reforming apparatus 100 as structured above is now described.
The temperature of the catalyst layer of the CO reducer 140 is preferably maintained at a temperature suitable for the reaction of reducing carbon monoxide. If the temperature of the catalyst layer deviates from a predetermined temperature range, an amount of carbon monoxide exceeding a defined amount reaches the fuel cell and degrades the catalyst of the fuel cell, which causes a drop in the power generation efficiency of the fuel cell.

Thus, the reforming apparatus 100 according to the present embodiment employs the self heat recovery type structure in the CO reducer 142 and, at the same time, controls the temperature of the catalyst layer by adjusting the feed rate of the combustion air to the combustor 130. Here, the self recovery type structure in the CO reducer 142 is such that the catalyst layer is heated possessed by the reformed gas supplied to the CO reducer 140. Though in the present embodiment a description is given of a case where the temperature of the catalyst layer 142a of the CO converter 142 in the CO reducer 140 is controlled, the selective oxidation catalyst layer 144a of the CO remover 144 in the CO reducer 140 can also achieve the same advantageous effects as those attained by the catalyst layer 142a thereof through the similar structure and control.

That is, the reforming apparatus 100 according to the present embodiment regulates the amount of heat possessed by the combustion exhaust gas that reaches the vaporizer 150, namely the temperature of the combustion exhaust gas, by regulating the feed rate of the combustion air to the combustor 130. Thereby, the heating rate of the reforming water by the combustion exhaust gas at the vaporizer 150, namely the temperature of the reforming water which is subjected to a heat exchange with the combustion exhaust gas at the vaporizer 150, can be regulated. Then the temperature of the reformed gas which is subjected to a heat exchange with the reforming water at the superheated steam generator 160 is regulated by adjusting the temperature of this reforming water. As a result, the temperature of the catalyst layer 142a heated by the heat possessed by this reformed gas can be regulated.

More specifically, as, for example, the feed rate of the combustion air to the combustor 130 is increased, the flow rate of the combustion exhaust gas produced at the combustor 130 increases, so that the amount of heat exchange between the combustion exhaust gas that has reached the reformer 120 and the reformer 120 decreases. Thus, the amount of heat of the combustion exhaust gas that has passed through the reformer 120 and reached the vaporizer 150 becomes larger. Accordingly, the amount of heat that the reforming water receives from the combustion exhaust gas at the vaporizer 150 becomes larger. This reforming water is subjected to a heat exchange with the reformed gas discharged from the reformer 120 at the superheated steam generator 160. And the amount of heat of the reforming water is large and therefore the difference in temperature between the reformed gas and the reforming water is small. Thus the amount of heat exchange between the reformed gas and the reforming water decreases. As a result, the reformed gas is supplied to the CO converter 142 at a temperature higher than when the feed rate of the combustion air is not increased. Thereby, the temperature of the catalyst layer 142a of the CO converter 142 can be raised. Note that increasing both the feed rate of the combustion air and the feed rate of the combustion fuel allows the temperature of the reforming catalyst layer of the reformer 120 to be kept constant.

On the other hand, as the feed rate of the combustion air to the combustor 130 is decreased, the flow rate of the combustion exhaust gas produced at the combustor 130 decreases, so that the amount of heat exchange between the combustion exhaust gas that has reached the reformer 120 and the reformer 120 increases. Thus, the amount of heat of the combustion exhaust gas that has passed through the reformer 120 and reached the vaporizer 150 becomes smaller. Accordingly, the amount of heat that the reforming water receives from the combustion exhaust gas at the vaporizer 150 becomes smaller. This reforming water is subjected to a heat exchange with the reformed gas discharged from the reformer 120 at the superheated steam generator 160. And the amount of heat of the reforming water is small and therefore the difference in temperature between the reformed gas and the reforming water is large. Thus the amount of heat exchange between the reformed gas and the reforming water increases. As a result, the reformed gas is supplied to the CO converter 142 at a temperature lower than when the feed rate of the combustion air is not decreased. Thereby, the temperature of the catalyst layer 142a of the CO converter 142 can be lowered. Note that decreasing both the feed rate of the combustion air and the feed rate of the combustion fuel allows the temperature of the reforming catalyst layer of the reformer 120 to be kept constant.

The control unit 180 regulates the feed rate of combustion air based on the temperature of the reforming water downstream of the vaporizer 150 or based on the temperature of the reformed gas downstream of the superheated steam generator 160, and thereby controls the heating rate of the reforming water by the combustion exhaust gas at the vaporizer 150. In the present embodiment, the control unit 180 stores a conversion table, in which the temperature of steam (reforming water) detected by the steam temperature sensor 162 is associated with the temperature of the catalyst layer 142a, in a storage (not shown). This conversion table is prepared beforehand through experiments or simulation runs carried out by a designer. Also, the control unit 180 calculates a temperature range of steam corresponding to a preferred temperature range of the catalyst layer 142a (hereinafter this temperature range will be referred to as "preferred steam temperature range" as appropriate) by the use of the conversion table, and stores the thus calculated preferred steam temperature range in the storage. Then the control unit 180 acquires the temperature of the reforming water that becomes steam after the reforming water has undergone a heat exchange with the reformed gas at the superheated steam generator 160, from a detection result of the steam temperature sensor 162 and then regulates the feed rate of combustion air in such a manner that the thus acquired temperature lies within the preferred steam temperature range. Thus the temperature of the catalyst layer 142a can be maintained within a preferred temperature range of the catalyst layer 142a. Here, the "preferred temperature range of the catalyst layer 142a" is a temperature range within which the activity of catalyst contained in the catalyst layer 142 is retained.

More specifically, if the temperature of steam detected by the steam temperature sensor 162 is greater than or equal to the upper limit of the preferred steam temperature range, the control unit 180 will lower the feed rate of the combustion air so that the temperature thereof can fall below the upper limit. Also, if the temperature of steam detected by the steam temperature sensor 162 is less than or equal to the lower limit of the preferred steam temperature range, the control unit 180 will raise the feed rate of the combustion air so that the temperature thereof can exceed the lower limit.

Here, the control unit 180 defines the feed rate of combustion air to the combustor 130, by an air ratio. The air ratio is a ratio of the amount of air actually supplied to the combustor 130 over the amount of air required for the complete combustion of combustion fuel supplied to the combustor 130, and is represented by {actual feed rate of combustion air}/{the amount of air theoretically required for the complete combustion of combustion fuel}. The air ratio to achieve the complete combustion of combustion fuel is "1" in theory. However, in order to stably achieve the complete burning of combustion fuel, in the actual setting an air ratio higher than the theoretical air ratio is set as the amount of air to be supplied during power generation. In other words, the fuel cell system is run by supplying an exceeding amount of air. Also, to stably combust the combustion fuel in the combustor 130, the air ratio is preferably within a predetermined range. If the air ratio falls below a lower limit of the predetermined range, an incomplete burning of combustion fuel may possibly occur. If the air ratio exceeds an upper limit of the predetermined range, and it is possible that an accidental fire is caused.

Thus, the control unit 180 varies the setup value of the air ratio to regulate the temperature of steam, and regulates the feed rate of combustion air by gradually or continuously varying the output of the combustion air blower 171 so that the actual air ratio can be changed to a changed air ratio. In this case, the control unit 180 adjusts the feed rate of combustion air so that the air ratio can lie within the aforementioned predetermined range. The control unit 180 stores the upper limit and the lower limit of the air ratio and a predetermined initial value in the storage.

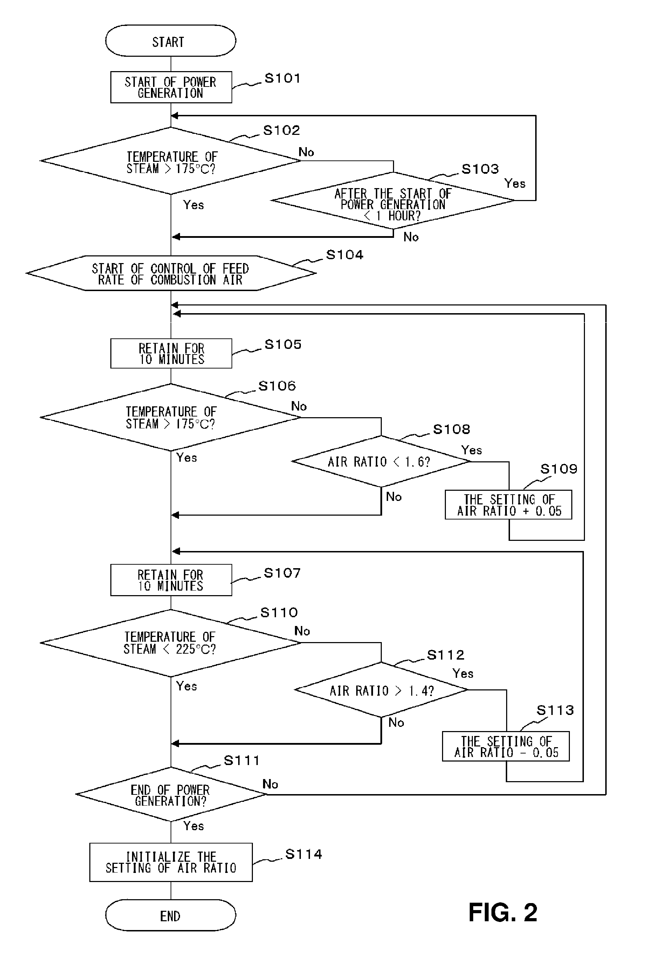

A detailed description is given hereunder of a control flow in operating the reforming apparatus 100. FIG. 2 is a control flow chart of controlling the feed rate of combustion air in the reforming apparatus according to the first embodiment. This flow is carried out by the control unit 180 and is started simultaneously with the power-on of the fuel cell system 10, for instance.

The air ratio is first set to an initial value and the amount of combustion air associated with the initial value is supplied to the combustor 130. Then a combustion exhaust gas is produced by the combustor 130 and the temperatures of catalyst layers of the reformer 120 and the CO reducer 140 are raised by the heat produced by the combustor 130. Alternatively, the temperatures of the respective catalyst layers may be raised by a not-shown heater. As it is detected that the temperature of each catalyst layer has been raised to a predetermined temperature or above, the power generation by the fuel cell system 10 is started (Step 101 which is hereinafter abbreviated as and referred to as "S101", and other Steps will be abbreviated similarly). As a predetermined length of time has elapsed after the power-on of the fuel cell system 10, for instance, it may be determined that the temperature of each catalyst has reached the predetermined temperature or above.

As the power generation is started, it is determined from the detection result of the steam temperature sensor 162 whether the temperature of steam has exceeded 175°C or not (S102). Here, the temperature of "175°C" is a lower limit of the aforementioned preferred steam temperature range. If the temperature of steam is 175°C or below (No of S102), it will be determined if a predetermined length of time, one hour, for instance, has elapsed after the start of power generation or not (S103). If one hour has not elapsed after the start of power generation (Yes of S103), it will be determined repeatedly if the temperature of steam has exceed 175°C or not (S102). If the temperature of steam has exceeded 175°C (Yes of S102), the control of the feed rate of combustion air performed according to the present embodiment is started (S104). If one hour has elapsed after the start of power generation (No of S103), namely, if the temperature of steam has not exceeded 175°C even after one hour has elapsed after the start of power generation, the control of the feed rate of combustion air performed according to the present embodiment is started (S104).

As the control of the feed rate of combustion air starts, the feed rate of combustion air is maintained at the current feed rate for a predetermined length of time of ten minutes, for instance (S105). Subsequently, it is determined whether the temperature of steam exceeds 175°C or not (S106). If the temperature of steam exceeds 175°C (Yes of S106), the feed rate of combustion air is again maintained at the current feed rate for a predetermined length of time of ten minutes, for instance (S107). If the temperature of steam is 175°C or below (No of S106), it will be determined whether the air ratio is less than 1.6 or not (S108). Here, the value "1.6" is an upper limit of the aforementioned air ratio. If the air ratio is less than 1.6 (Yes of S108), the setup value of air ratio will be set to a value larger by 0.05 and then the feed rate, of combustion air, associated with the thus changed air ratio will be supplied (S109). Then the feed rate of combustion air is maintained for ten minutes only (S105) and it is determined whether the temperature of steam exceeds 175°C or not (S106). If the air ratio is 1.6 or above (No of S108), the air ratio will remain unchanged and the feed rate of combustion air will be maintained for ten minutes only (S107).

Then, it is determined whether the temperature of steam is less than 225°C or not (S110). Here, the temperature of "225°C" is an upper limit of the aforementioned preferred steam temperature range. If the temperature of steam is less than 225°C (Yes of S110), it will be determined whether the power generation has been stopped or not (S111). If the temperature of steam is 225°C or above (No of S110), it will be determined whether the air ratio exceeds 1.4 or not (S112). Here, the value "1.4" is a lower limit of the aforementioned air ratio. If the air ratio exceeds 1.4 (Yes of S112), the setup value of air ratio will be set to a value smaller by 0.05 and then the feed rate, of combustion air, associated with the thus changed air ratio will be supplied (S113). Then the feed rate of combustion air is maintained for ten minutes only (S107) and it is determined whether the temperature of steam becomes less than 225°C or not (S110). If the air ratio is 1.4 or less (No of S112), it will be determined if the power generation has been stopped without changing the air ratio (S111).

If the power generation is not stopped (No of S111), the process will return to S105 and the above-described control will be repeated. If, on the other hand, the power generation has stopped (Yes of S111), the value of the air ratio will be initialized (S114) and this flow will come to an end.

To sum up the operations of and the advantageous effects achieved by the structure described as above, by employing the reforming apparatus 100 according to the present embodiment, the reforming water is heated by the combustion exhaust gas and then subjected to a heat exchange with the reformed gas so as to be converted into steam and supplied to the reformer 120, and the reformed gas, which has been subjected to a heat exchange with the reforming water, is supplied to the CO reducer 14. Then, as a result of the heat exchange with the reformed gas supplied to the CO reducer 140, the temperature of the catalyst layer 142a is regulated. In such a structure, the control unit 180 controls the heating rate of the reforming water by the combustion exhaust gas, by regulating the feed rate of combustion air to the combustor 130 and thereby controls the temperature of the reforming water. As a result, the temperature of the reformed gas which is subjected to a heat exchange with the reformed gas at the superheated steam generator 160 is regulated, which in turn regulates the temperature of the catalyst of the CO reducer 140. Thus, by employing the reforming apparatus 100 according to the present embodiment, the catalyst layer of the CO reducer 140 can be maintained at a suitable temperature by regulating the feed rate of combustion air to the combustor 130.

Also, the reforming apparatus 100 is provided with the steam temperature sensor 162 for detecting the temperature of steam supplied to the reformer 120, and the reforming apparatus 100 controls the temperature of catalyst layers by regulating the feed rate of combustion air based on the detection result of the steam temperature sensor 162. When the steam temperature sensor 162 is to be installed in a conduit of steam, the mounting structure can be made simpler as compared with the case when a temperature sensor for sensing the temperature of catalyst layers is fixed to the catalyst layer. Also, when the steam temperature is to be measured, the number of spots to be measured can be reduced as compared with a case when the temperature of catalyst layer is directly measured. Thus, by employing the reforming apparatus 100 according to the present embodiment, the manufacturing cost of the reforming apparatus 100 can be reduced, so that that the manufacturing cost of the fuel cell system 10 can be reduced.

Further, in the reforming apparatus 100 according to the present embodiment, a heat exchange can be performed between the catalyst layer 142a of the CO converter 142 and the reforming water. The temperature of the catalyst layer 142a can be controlled by a heat exchange with the reforming water in addition to a heat exchange with the reformed gas. Thus, by employing the reforming apparatus according to the present embodiment, a higher accurate control of the temperature of catalyst layers can be performed. Also, since the temperature of the reforming water can be raised by the heat of the catalyst layer 142a, the thermal efficiency of the reforming apparatus as a whole can be improved.

### (Second Embodiment)

A reforming apparatus, for fuel cell, according to a second embodiment differs from the reforming apparatus according to the first embodiment in that the apparatus of the second embodiment regulates the feed rate of combustion air and the feed rate of reforming water so as to control the temperature of the reforming water which is subjected to a heat exchange with the reformed gas. A description is now given of the second embodiment. The structure of a fuel cell system including the reforming apparatus for fuel cell according to the second embodiment is basically identical to that according to the first embodiment. The same components as those of the first embodiment are given the same reference numerals and the explanation thereof is omitted as appropriate.

A reforming apparatus 100 according to the second embodiment regulates the amount of heat possessed by a combustion exhaust gas that reaches the vaporizer 150 and also regulates the heating rate of reforming water by the combustion exhaust gas at the vaporizer 150, by regulating the feed rate of combustion air. At the same time, the feed rate of the reforming water to the reforming apparatus 100 is also regulated. In combination of these, the temperature of the reforming water sent to the superheated steam generator 160 is regulated, thereby regulating the temperature of the reformed gas which is subjected to a heat exchange with this reforming water at the superheated steam generator 160. As a result, the temperature of the catalyst layer 142a heated by the heat possessed by this reformed gas can be regulated.

More specifically, as, for example, the feed rate of the combustion air to the combustor 130 is increased, the amount of heat of the combustion exhaust gas given to the reforming water at the vaporizer 150 becomes larger as described in the first embodiment. On the other hand, as the feed rate of the reforming water is decreased, the amount of the reforming water that receives heat from the combustion exhaust gas at the vaporizer 150 becomes smaller. Thus, the temperature of the reforming water that has passed through the vaporizer 150 and reached the superheated steam generator 160 becomes higher. As a result, the difference in temperature between the reformed gas and the reforming water is small and therefore the amount of heat exchange between the reformed gas and the reforming water decreases. As a result, the reformed gas is supplied to the CO converter 142 at a high temperature. Thereby, the temperature of the catalyst layer 142a of the CO converter 142 can be raised.

On the other hand, as the feed rate of the combustion air to the combustor 130 is decreased, the amount of heat of the combustion exhaust gas given to the reforming water at the vaporizer 150 becomes smaller as described in the first embodiment. On the other hand, as the feed rate of the reforming water is increased, the amount of the reforming water that receives heat from the combustion exhaust gas at the vaporizer 150 becomes larger. Thus, the temperature of the reforming water that has passed through the vaporizer 150 and reached the superheated steam generator 160 becomes lower. As a result, the difference in temperature between the reformed gas and the reforming water is large and therefore the amount of heat exchange between the reformed gas and the reforming water at the superheated steam generator 160 increases. As a result, the reformed gas is supplied to the CO converter 142 at a low temperature. Thereby, the temperature of the catalyst layer 142a of the CO converter 142 can be lowered.

According to the second embodiment, the temperature of the reforming water which is subjected to a heat exchange with the reformed gas is controlled in such manner that the adjustment of the feed rate of combustion air is combined with the adjustment of the feed rate of reforming water. Hence, the temperature of catalyst layers can be regulated with a higher accuracy.

The control unit 180 stores a conversion table, in which the temperature of steam (reforming water) detected by the steam temperature sensor 162 is associated with the temperature of the catalyst layer 142a, in a storage. Also, the control unit 180 stores information on the preferred steam temperature range in the storage. Then the control unit 180 acquires the temperature of the reforming water that becomes steam from a detection result of the steam temperature sensor 162, and regulates the feed rate of combustion air and the feed rate of reforming water in such a manner that the thus acquired temperature lies within the preferred steam temperature range.

Here, the control unit 180 defines the feed rate of combustion air to the combustor 130, by the air ratio. Thus, the control unit 180 varies the setup value of the air ratio to regulate the temperature of steam, and regulates the feed rate of combustion air by gradually or continuously varying the output of the combustion air blower 171 so that the actual air ratio can be changed to a changed air ratio.

Also, the control unit 180 defines the feed rate of reforming water to the reforming apparatus 100, by S/C (the ratio of S over C). Here, C is the mole ratio of carbon atoms in the raw fuel to a theoretical water quantity in the reforming reaction, and S is the mole ratio of carbon atoms to the feed rate of the actual reforming water. Accordingly, the control unit 180 varies the setup value of S/C to regulate the temperature of steam, and regulates the feed rate of combustion air by gradually or continuously varying the output of the reforming water pump 174 so that the actual S/C ratio can be changed to a changed S/C ratio.

A description is now given of S/C in an example where a reforming reaction of propane (C₃H₈) takes places. The reforming reaction of propane is expressed by the following formula (6), and it is evident that three moles of water is theoretically required for one mole of propane in the reforming reaction of propane.

C₃H₈+3H₂0-77H₂+3CO (6)

In contrast to this, if the reforming water which is actually supplied is nine moles, for instance, then S/C = 9/3 = 3.

Normally, in the reforming reaction, the reforming water whose quantity is larger than the theoretical water quantity is supplied to ensure the reaction. Also, to stably carry out the reforming reaction, S/C is preferably within a predetermined range. If S/C falls below a lower limit of the predetermined range, the caulking will be more likely to occur where carbon precipitates on the surface of reforming catalysts at the reforming reaction. If S/C exceeds an upper limit of the predetermined range, the energy consumed during the reforming reaction will increase. Thus, the control unit 180 adjusts the feed rate of reforming water so that S/C can lie within the predetermined range. The control unit 180 stores the upper limit and the lower limit of S/C and a predetermined initial value in the storage.

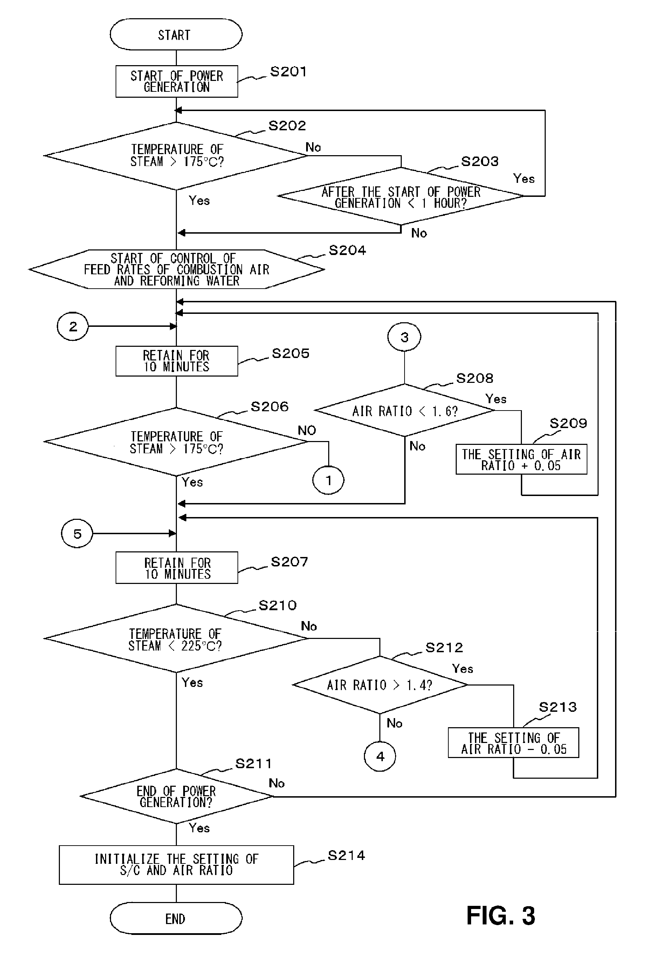

A detailed description is given hereinbelow of a control flow in operating the reforming apparatus 100. FIG. 3 to FIG. 5 are each a control flow chart of controlling the feed rates of combustion air and reforming water in the reforming apparatus according to the second embodiment. A description is given hereunder of the second embodiment centering around differences from the first embodiment.

As shown in FIG. 3, the air ratio and S/C are first set to their initial values. As it is detected that the temperature of each catalyst layer has been raised to a predetermined temperature or above, the power generation by the fuel cell system 10 is started (S201).

As the power generation is started, the reforming water quantity corresponding to S/C at the initial value is supplied and it is determined whether the temperature of steam has exceeded 175°C or not (S202). If the temperature of steam is 175°C or below (No of S202), it will be determined if a predetermined length of time, one hour, for instance, has elapsed after the start of power generation or not (S203). If one hour has not elapsed after the start of power generation (Yes of S203), it will be determined repeatedly if the temperature of steam has exceed 175°C or not (S202). If the temperature of steam has exceeded 175°C (Yes of S202) or if one hour has elapsed after the start of power generation (No of S203), the control of the feed rates of combustion air and reforming water performed according to the present embodiment is started (S204).

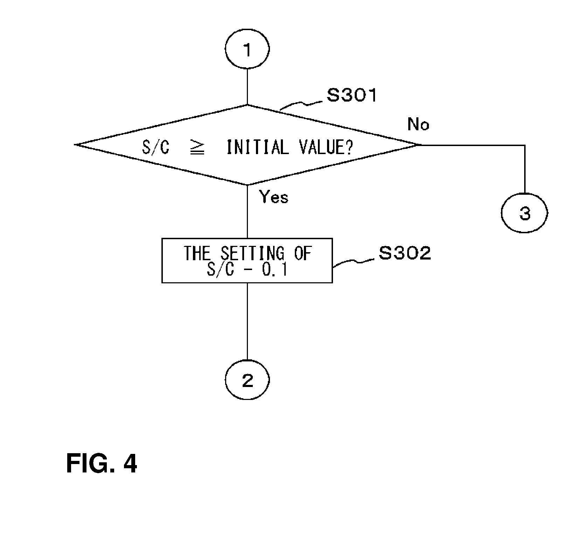

As the control according to the present embodiment starts, the feed rates of combustion air and reforming water are maintained for ten minutes only (S205). Subsequently, it is determined whether the temperature of steam exceeds 175°C or not (S206). If the temperature of steam exceeds 175°C (Yes of S206), the feed rates of combustion air and reforming water is maintained for another ten minutes only (S207). If the temperature of steam is 175°C or below (No of S206), it will be determined, as shown in FIG. 4, whether S/C is greater than or equal to the initial value or not (S301). If S/C is the initial value or above (Yes of S301), the setup value of S/C will be set to a value smaller by 0.1 and then the feed rate, of reforming water, associated with the thus changed S/C will be supplied (S302). Then, referring back to FIG. 3, the feed rates of combustion air and reforming water are maintained for ten minutes only (S205), and it is determined whether the temperature of steam exceeds 175°C or not (S206). Here, the initial value of S/C is set to a value larger than the lower limit by 0.1.

As shown in FIG. 4, if S/C is less than the initial value (No of S301), it will be determined, referring back to FIG. 3, whether the air ratio is less than 1.6 or not (S208). If the air ratio is less than 1.6 (Yes of S208), the setup value of air ratio will be set to a value larger by 0.05 and then the feed rate, of combustion air, associated with the thus changed air ratio will be supplied (S209). Then the feed rates of combustion air and reforming water are maintained for ten minutes only (S205) and it is determined whether the temperature of steam exceeds 175°C or not (S206). If the air ratio is 1.6 or above (No of S208), the air ratio will remain unchanged and the feed rates of combustion air and reforming water will be maintained for ten minutes only (S207).

Then, it is determined whether the temperature of steam is less than 225°C or not (S210). If the temperature of steam is less than 225°C (Yes of S210), it will be determined whether the power generation has been stopped or not (S211). If the temperature of steam is 225°C or above (No of S210), it will be determined whether the air ratio exceeds 1.4 or not (S212). If the air ratio exceeds 1.4 (Yes of S212), the setup value of air ratio will be set to a value smaller by 0.05 and then the feed rate, of combustion air, associated with the thus changed air ratio will be supplied (S213). Then the feed rates of combustion air and reforming water are maintained for ten minutes only (S207) and it is determined whether the temperature of steam becomes less than 225°C or not (S210).

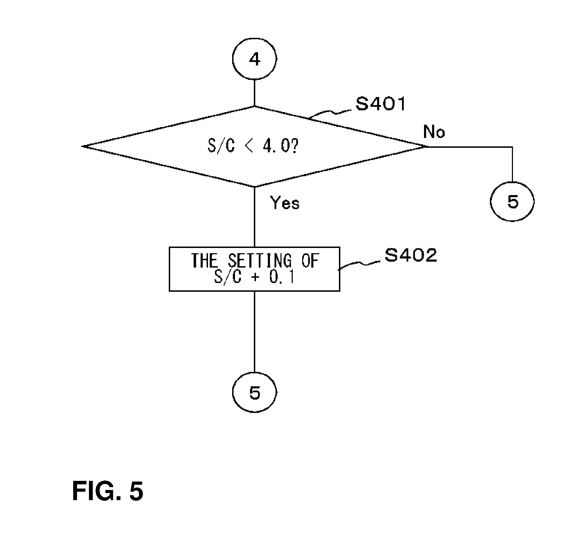

If the air ratio is 1.4 or less (No of S212), it will be determined, as shown in FIG. 5, if S/C is less than 4.0 or not (S401). Here, the value "4.0" is an upper limit of the aforementioned S/C. If S/C is less than 4.0 (Yes of S401), the setup value of S/C will be set to a value larger by 0.1 and then the feed rate, of reforming water, associated with the thus changed S/C will be supplied (S402). Then, referring back to FIG. 3, the feed rates of combustion air and reforming water are maintained for ten minutes only (S207) and it is determined whether the temperature of steam exceeds 225°C or not (S210). If, as shown in FIG. 4, S/C is 4.0 or above (No of S401), S/C will remain unchanged and, referring back to FIG. 3, the feed rates of combustion air and reforming water will be maintained for ten minutes only (S207). In this manner, if the feed rate of combustion air is adjusted prior to the adjustment of the feed rate of reforming water, it will be possible to desirably eliminate a change, in the quantity of hydrogen generated in the reformer 120, which otherwise occurs as a result of the adjustment of the feed rate of reforming water in the reformer 120.

If the power generation is not stopped (No of S211), the process will return to S205 and the above-described control will be repeated. If, on the other hand, the power generation has stopped (Yes of S211), the values of S/C and the air ratio will be initialized (S214) and this flow will come to an end.

To sum up the operations of and the advantageous effects achieved by the structure described as above, by employing the reforming apparatus 100 according to the present embodiment, the heating rate of reforming water by the combustion exhaust gas is regulated by regulating the feed rate of combustion air. At the same time, the temperature of the reforming water which is subjected to a heat exchange with the reformed gas at the superheated steam generator 160 is regulated by regulating the feed rate of reforming water. Thereby, the temperature of the reformed gas which is subjected to a heat exchange with the reforming water at the superheated steam generator 160 can be regulated, so that the temperature of the catalyst layers of the CO reducer 140 can be regulated. Thus, in addition to the advantageous effects achieved by the first embodiment, the second embodiment achieves an advantageous effect where the temperature of the catalyst layers can be adjusted promptly with a higher accuracy.

The present invention is not limited to the above-described embodiments only, and it is understood by those skilled in the art that various modifications such as changes in design may be made based on their knowledge and the embodiments added with such modifications are also within the scope of the present invention. New embodiments that derive from the combination of the above-described embodiments and the following modifications achieve advantageous effects of the both embodiments and modifications.

For example, the solid polymer electrolyte membrane is used as the electrolyte membrane in the above-described embodiments. However, this should not be considered as limiting and, for example, an inorganic/organic complex polymer electrolyte membrane may be used instead. The catalysts provided in the reformer 120, the CO converter 142, and the CO remover 144 are not limited to those described above and, for example, other known catalysts may be used instead.

In the above-described embodiments, the temperature of steam that has passed through the superheated steam generator 160 is detected by the steam temperature sensor 162 and thereby the feed rates of combustion air and reforming water are regulated. However, this should not be considered as limiting in particular and, for example, the temperature of a mixed gas of steam and raw fuel located upstream of the reformer 120 may be detected so as to thereby regulate the feed rates of combustion air and reforming water. Alternatively, the temperature of the reformed gas located upstream or down stream of the CO reducer 140 may be detected so as to thereby regulated the feed rates of combustion air and reforming water.

### DESCRIPTION OF THE REFERENCE NUMERALS

100 Reforming apparatus
120 Reformer
130 Combustor
140 Carbon monoxide reducer, CO reducer
142 Carbon monoxide converter, CO converter
144 Carbon monoxide remover, CO remover
150 Vaporizer
160 Superheated steam generator
162 Steam temperature sensor
180 Control unit

### INDUSTRIALAPPLICABILITY

The present invention is employed for a reforming apparatus for a fuel cell which generates a reformed gas containing hydrogen gas as the main component by reforming raw fuel.

## Claims

1. A reforming apparatus (100) for a fuel cell (200), comprising:
a reformer (120) configured to generate a reformed gas containing hydrogen gas as a main component by reacting raw fuel with steam;
a combustor (130) configured to produce a combustion exhaust gas for heating the reformer (120), by mixing the raw fuel or cell offgas with combustion air and combusting the raw fuel or cell offgass mixed with the combustion air;
a heating unit (150) configured to heat reforming water, which is a source of the steam, by the combustion exhaust gas;
a heat exchanger (160) configured to perform a heat exchange between the reforming water having passed through the heating unit (150) and the reformed gas;
a carbon monoxide reducer (140) to which the reformed gas, which has been subjected to a heat exchange with the reforming water at the heat exchanger (160), is supplied,
the carbon monoxide reducer (140) being configured to regulate the temperature of a catalyst layer (142a, 144a) as a result of the heat exchange with the reformed gas, and
the carbon monoxide reducer (140) having the catalyst layer (142a, 144a) containing a catalyst capable of promoting a reaction of reducing carbon monoxide contained in the reformed gas;
an air supply unit (171) configured to supply the combustion air to the combustor (130); and
a controller (180) configured to regulate a feed rate of the combustion air to the combustor (130) by controlling the air supply unit (171),
wherein the controller (180) controls the heating rate of the reforming water by the combustion exhaust gas at the heating unit (150) in a manner such that the feed rate of the combustion air is regulated based on the temperature of the reforming water downstream of the heating unit (150) or based on the temperature of the reformed gas downstream of the heat exchanger (160).

2. A reforming apparatus (100), for a fuel cell (200), according to claim 1, wherein when the temperature of the reforming water downstream of the heating unit (150) or the temperature of the reformed gas downstream of the heat exchanger (160) is a predetermined upper limit or above, the controller (180) lowers the feed rate of the combustion air in such a manner as to fall below the upper limit, and
when the temperature of the reforming water downstream of the heating unit (150) or the temperature of the reformed gas downstream of the heat exchanger (160) is a predetermined lower limit or below, the controller (180) raises the feed rate of the combustion air in such a manner as to exceed the lower limit.

3. A reforming apparatus (100), for a fuel cell (200), according to claim 1 or claim 2, further comprising a temperature detector (162) configured to detect the temperature of the steam supplied to the reformer (120),
wherein the controller (180) regulates the feed rate of the combustion air to the combustor (130) based on a detection result of the temperature detector (162).

4. A reforming apparatus (100), for a fuel cell (200), according to any one of claim 1 to claim 3, further comprising a reforming water supply unit (174) configured to supply the reforming water to the reforming apparatus (100) for a fuel cell (200),
wherein the controller (180) is capable of regulating the feed rate of the reforming water to the reforming apparatus (100) for a fuel cell (200) by controlling the reforming water supply unit (174), and
the controller (180) controls the temperature of the reforming water, which is subjected to the heat exchange with the reformed gas, by regulating the feed rates of the combustion air and the reforming water.

5. A reforming apparatus (100), for a fuel cell (200), according to any one of claim 1 to claim 4, further comprising a structure by which to perform a heat exchange between the catalyst layer (142a, 144a) and the reforming water,
wherein the temperature of the catalyst layer (142a, 144a) is controlled by a heat exchange with the reforming water in addition to a heat exchange with the reformed gas supplied to the carbon monoxide reducer (140).
